Europäisches Patentamt

European Patent Office

Office européen des brevets

(19)

(11) Publication number: **0 088 638**
**B1**

(12) **EUROPEAN PATENT SPECIFICATION**

(45) Date of publication of the patent specification:
25.09.85

(51) Int. Cl.⁴: **B 01 J 8/18,** B 01 J 8/44,
C 08 F 10/00, C 08 F 2/34,
F 27 B 15/10

(21) Application number: 83301306.3

(22) Date of filing: 09.03.83

(54) **Distributor for a fluidized bed reactor.**

(30) Priority: 10.03.82 IT 2006282

(43) Date of publication of application:
14.09.83 Bulletin 83/37

(45) Publication of the grant of the patent:
25.09.85 Bulletin 85/39

(84) Designated Contracting States:
AT BE DE FR GB NL SE

(56) References cited:
EP - A - 0 050 519
US - A - 3 251 337
US - A - 3 298 792
US - A - 4 035 152
US - A - 4 337 069

(73) Proprietor: Montedison S.p.A., 31, Foro Buonaparte,
I-20121 Milan (IT)

(72) Inventor: **Govoni, Gabriele, 63, Via Pilastro, Renazzo**
**Ferrara (IT)**
Inventor: **Corazzari, Canzio, 250, Via Virgiliana, Pilastri**
**Ferrara (IT)**
Inventor: **Di Stefano, Giovanni, 188, Via Marconi, Ferrara**
**(IT)**
Inventor: **Loconsolo, Mauro, 71, Via Ravenna, Ferrara**
**(IT)**

(74) Representative: **Whalley, Kevin et al, Marks &**
**Clerk 57/60 Lincoln's Inn Fields, London WC2A 3LS (GB)**

ACTORUM AG

# Description

This invention relates to a distributor for a fluidized bed reactor.

In apparatus for chemical-physical operations in which a gas is brought into contact with a solid material in the shape of particles, maintaining these latter in the state of a fluidized bed, a distributor is provided for distributing the gas sent into the fluidized bed. The importance of the distributor for the smooth and regular and correct working of the fluidized bed apparatus is well known.

In fact, on the distributor depends the taking place of the fluidization, the uniform distribution of the gas in the bed, with the absence of dead zones, and the frequency and the dimensions (size) of bubbles in the bed, with appreciable effects on the mixing of the solids and on the exchange of matter and heat inside the system.

Usually it is necessary that the distributor shall ensure a uniform distribution of the gas; shall hinder the fall of solids under the distributor during its working as well as during cessation of working; and that it shall have such a shape as to minimize the losses of load and damage due to erosion.

There are many types of distributors that will ensure the above performances and which consist substantially of a plate provided with numerous small holes which will allow the passage of gas but not that of the solid particles that form the fluidized bed.

The present invention provides a distributor for the distribution of gases and vapours in fluidized beds of solid particles which, in addition to the previously specified characteristics, will have that of being passable by the solids dragged along by the gases and vapours that are recycled back into the bed.

More particularly, the present invention in one aspect provides a distributor of fluidization gases for a fluidized bed reactor, which comprises a double cone body comprising:

(a) a lower conical element, arranged in use with the vertex thereof directed downwards, provided with more than two ribs on the lateral surface thereof, the said ribs having such a profile as to form, together with the wall of a containing shell for the distributor, flow channels having a decreasing cross-section in an upward direction so that the velocity of gas flowing therealong will increase gradually and correspondingly, the ribs being arranged diametrically opposite to each other with an axial symmetry and with an inclination with respect to the vertical such as to impart to the inflowing gas current a tangential component, the profile and inclination of the ribs being such as to allow the passage of solid particles entrained by the inflowing gas, and such as to hinder the falling back of the particles of the fluidized bed whenever the feeding in of the gas is interrupted; and

(b) an upper conical element arranged in use with the vertex thereof directed upwards, superimposed onto the lower conical element and having the function of activating the circulation of the solid in the fluidized bed, eliminating dead or stagnation zones.

The distributor of the present invention essentially consists of two conically-shaped elements. The lower one has its vertex pointing downwards and is provided with more than two ribs or fins (referred to hereinafter in this specification only as ribs), but preferably with from 6 to 24 ribs, having such a profile as to form channels (grooves) for the passage of fluids and with a decreasing cross-section starting from the vertex and directed towards the base of the conical element, in which channels the flow speed of the gas will gradually increase. The ribs forming these channels are arranged in axial symmetry with respect to each other and are inclined with respect to the vertical axis such that the powdery material of the fluidized bed shall not descend along such channels during suspension or cessation of the fluidizing process (suspension of the emission of gases). Moreover, the inclination of the ribs imparts to the gas flow a tangential component which will ensure a good distribution of the gas, avoiding the formation of dead zones.

The upper conical element has its vertex pointing upwards and has the function of activating the circulation of the solid in the fluidized bed, in order to achieve at all locations a good mixing through and to avoid the formation of dead zones and stagnation. This conical element may also take the shape of a truncated cone and may be provided with a central duct for the discharge of the powdery material of the fluidized bed.

The distributor according to the invention may be provided with a series of ribs arranged on concentric conical elements, as described in more detail subsequently.

The distributor may also be constructed as a rotating distributor, again as described in more detail subsequently, arranged with a particular asymmetry that will favour the passage of the gas preferably to a peripheral zone to the disadvantage of the diametrically opposite zone; this is achieved by rotating the distributor at a suitable speed, preferably from 3 to 30 rpm. Thereby there is achieved a flow rate at which the gas will fluidize the bed in one zone and the solids will drop into another zone, the position of these zones being continuously varied by the rotation of the distributor.

The inflowing of the gas into the distributor may be axial or tangential, and the discharging of the solids may be likewise effected through the fluidized bed laterally or from the bottom axially. The distributor may also be traversed axially by a rotating shaft for the control of possible internal scrapers intended for ensuring a mild stirring and the removal from the walls of possible agglomerations of solid.

The flow speed of the gas in the fluidized bed should usually be equal to or greater than the speed of minimum fluidization, and preferably should be from 2 to 50 times the speed of minimum fluidization. In any case, such speed is a function of the particular substance used and of the size and morphology of the solid particles.

In the case of a mechanically stirred bed, the flow speed of the gas may be lower than the speed of minimum fluidization.

In any case there must be ensured an effective mixing through of the fluidized bed in order to achieve a fast renewal at all locations of the fluidized bed itself. As a result, with the distributor according to the invention, the flow rate of the solids determines a downward flow of the solids in the vicinity of the walls of the reactor and an upward flow in correspondence with the central axis of the reactor.

Also with granular fluids of a low flowability and with a high stickiness it is possible to operate without encountering problems of pollution of the reactor or of an ineffective distribution of the gas.

The invention in another aspect provides a fluidized bed reactor provided with a distributor according to the first aspect of the invention and further comprising means for recycling of the gas, wherein the distributor and the recycling means allow the passage of solid particles of the fluidized material entrained by the recycling gas.

In order to avoid soilings in the cylindrical and frusto-conical regions of the reactor walls, two systems may be adopted.

The first, already described in U.S. Patent No. 3298792, consists in providing a rotating blade rotating at more than 1 revolution per minute, preferably from 1 to 10 revolutions per minute, which exerts a scraping action on the reactor walls in order to hinder the accumulation of layers of solid on the walls themselves. This system has proved fully effective in practice.

The second system, which is based on the observation that an excellent descaling agent for the walls is the solid itself when it is kept under vigorous motion, consists in inserting in the upper zone of the reactor a rotating separator, which will generate a flow of solid which from the centre will be violently pushed towards the wall of the reactor by centrifugal force, thereby exerting a cleaning action.

The aim of the cleaning of the internal surfaces of the reactor is attained in this particular case with a means that causes also a separation of the solids dragged along by the outflowing gas. As already indicated, this is not necessary because the gas distributor according to the invention has the characteristic that it may be traversed by the particles of the solid; however, the separation effect obtained may be advantageous when exhaust gas for recycling must be free of dust because of requirements of the process or because of anti-pollution limitations or other reasons.

The invention in a further aspect provides a process for the polymerization and copolymerization of $\alpha$-olefins in a gaseous phase, on a fluidized bed comprising polymerized material containing catalyst, wherein the process is carried out in a fluidized bed reactor according to the invention.

The invention in a yet further aspect provides a process for the copolymerization of ethylene/propylene in a gaseous phase, on a fluidized bed comprising polymerized material containing catalyst, under such processing conditions as to obtain an amorphous copolymer, wherein the process is carried out in a fluidized bed reactor according to the invention.

The invention will be further described, by way of example only, with reference to the accompanying drawings, in which:

Fig. 1 is a schematic view of a fluidized bed reactor according to one aspect of the present invention;

Fig. 2 is a side and a plan view of one embodiment of a distributor of fluidization gases, according to the invention, for use in the fluidized bed reactor according to Fig. 1;

Fig. 3 is a side view of another embodiment of a distributor of fluidization gases, according to the invention, also for use in the fluidized bed reactor according to Fig. 1;

Fig. 4 and 5 are each a side and a plan view of further embodiments of distributors of fluidization gases, according to the invention, suitable for use in the fluidized bed reactor according to Fig. 1; and

Fig. 6 is a graph of percentage cumulative weight against diameter of polymer particles.

In the drawings, like reference numerals indicate like parts.

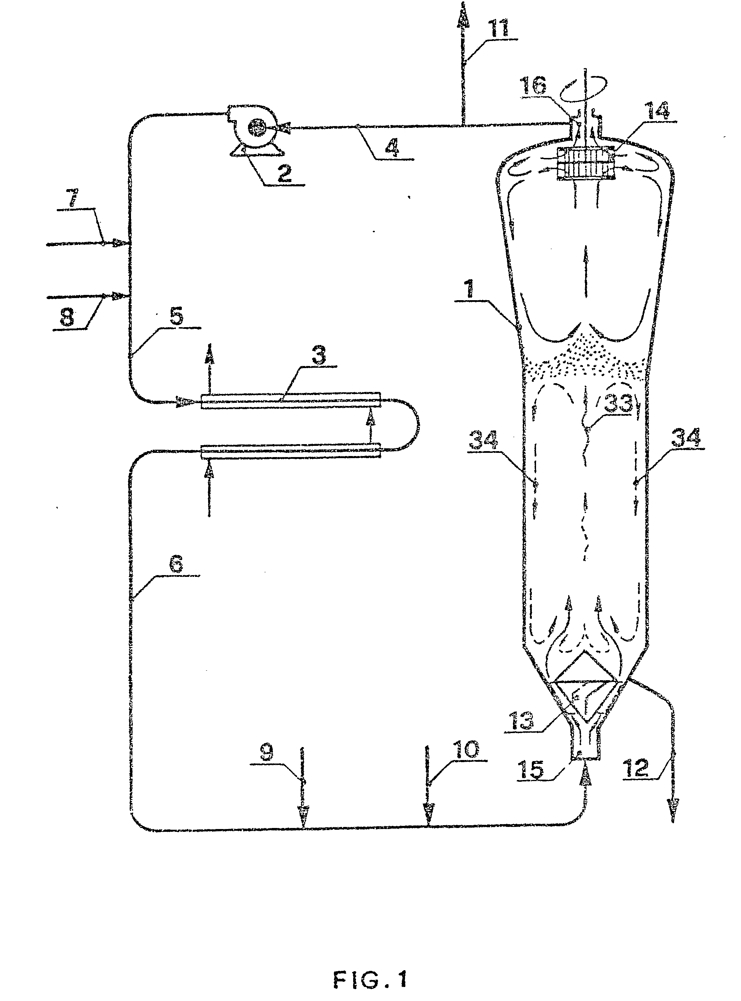

The apparatus shown in Fig. 1 comprises a fluidized bed reactor 1 the top of which is connected by a line 4 to a centrifugal compressor 2 for recycling of gas, which is in turn connected by a line 5 to a heat exchanger 3 with lined piping. The heat exchanger 3 is connected by a line 6 to the base of the reactor 1. To the line 5 is connected a feed 7 of ethylene monomer ($C_2^-$) and a feed 8 of propylene monomer ($C_3^-$), while to the line 6 is connected a feed 9 of catalyst containing copolymer base and a feed 10 of reaction activator. A recycling gas exhaust 11 leads from the line 4, and a lateral discharge 12 for polymer leads from adjacent the bottom of the reactor 1.

At the bottom of the reactor 1 is a gas distributor 13, while at the top of the reactor is a centrifugal separator 14 for polymer particles. Reference numeral 15 indicates current flowing into the reactor, with axial flow, while numeral 16 indicates current flowing out of the reactor.

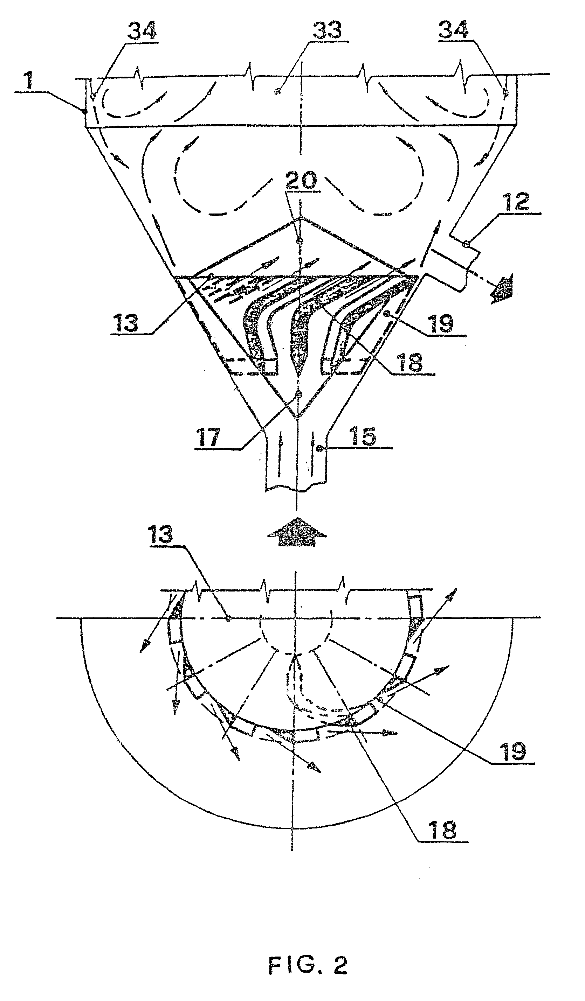

The distributor 13 is shown in more detail in Fig. 2, and comprises a lower conical element 17 arranged with its vertex directed downwards, and an upper conical element 20 arranged with its vertex directed upwards and superimposed onto the lower conical element. The conical element 17 has slanting and warped conveying ribs 18 and conveying channels 19 with decreasing cross-section, as shown.

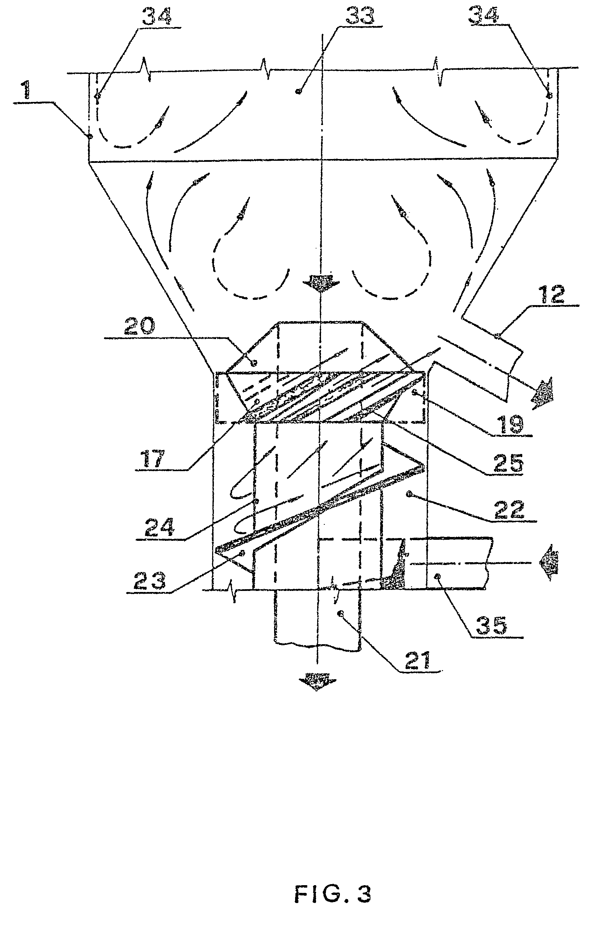

As shown in Fig. 3, the axial discharge 21 of polymer is from the bottom of the reactor, and a chamber 22 is formed with tangential inflow of current fed into the reactor, achieved with the help of an inclined or helical conveying plane 23, formed on the extension of a rib. The chamber 22 is defined by a cylindrical body 24 of the distributor and by the adjacent wall of the reactor 1. Fig. 3 also shows conveying ribs 25 without warping.

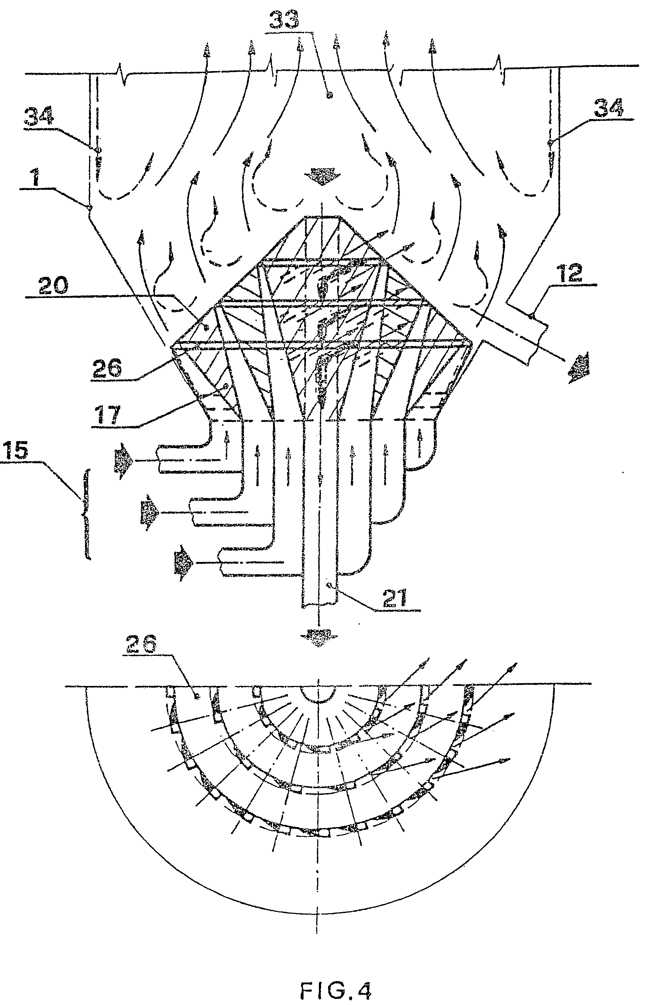

Fig. 4 shows a distributor 26 with upper and lower concentric conical elements 17 and 20 provided with a plurality of annular ribbed crowns. In this embodiment, the current flow 15 is through a plurality of channels, as shown.

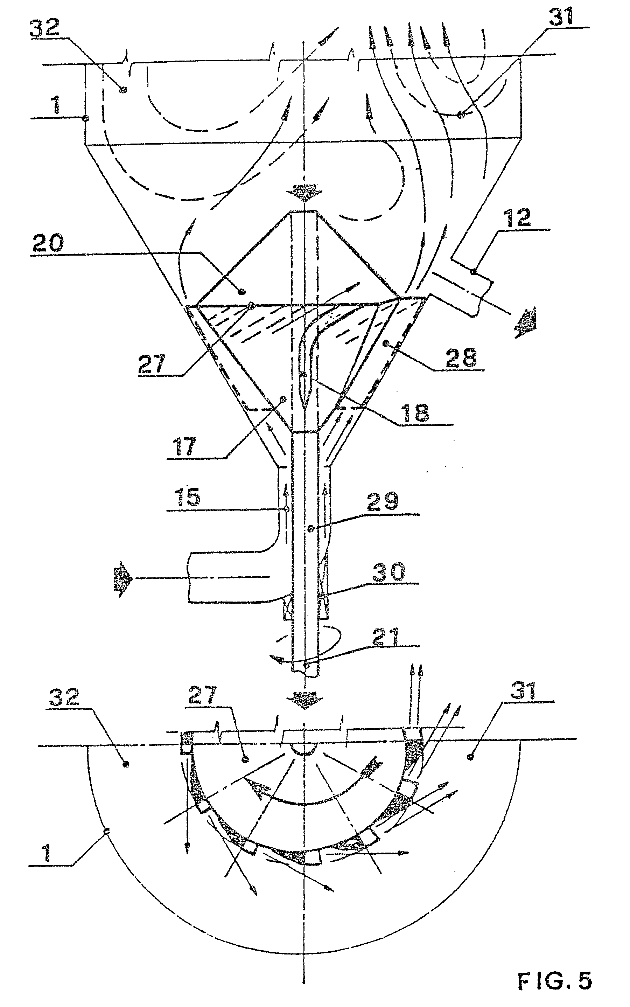

Fig. 5 shows a rotating distributor 27 with asymmetrical conveying channels, having a lateral side 28 of decreasing cross-section. The distributor 27 has a rotary tubular shaft 29 provided with a packing gland 30. Fig. 5 also indicates by reference numeral 31 a lateral fluidization zone of the polymer, and by reference numeral 32 a lateral polymer re-dropping zone. In this embodiment, as a result of the rotation of the distributor at a suitable speed, for example 3 to 30 rpm, there is achieved a flow rate at which the gas will fluidize the bed in the zone 31 and the solids will drop into the zone 32, the position of the zones 31 and 32 being continuously varied by the rotation of the distributor.

All the Fig. 1 to 4 show a zone 33 of entrainment of the polymer along the axis of the apparatus, and a zone 34 of the downward flow of the polymer near the wall of the fluidized bed reactor.

Certain aspects of the embodiments described with reference to the drawings will now be referred to in more detail.

The compressor 2 consists of a device for the fluxing of the shaft behind the impeller or rotor, in order to avoid any solid approaching the gasket and with the centrifugal impeller in action so that it may be traversed by the gas containing also considerable quantities of dust, and to be capable of ensuring such a flow rate as to maintain in the circuit sufficiently high speeds (greater than 5 mt/s, and preferably 10-40 mt/s) so as to hinder any sedimentation of the powder along the connection lines 4, 5 and 6, with possible ensuing clogging due to the accumulation of solid substance.

The heat exchanger 3, if necessary, should be of the pipe-in-pipe type. In the exchanger 3, the gas and the powders dragged along may be heated or cooled down according to the requirements of the process, using as a fluid for the thermal exchange water, steam, oil or any other substance according to the specific case. Such service fluid passes along the external pipe, while the process gas passes along the internal pipe to which may be applied a series of longitudinal ribs on the gas side, in order to facilitate the disposal or acquisition of heat.

If the quantity of heat involved requires the installation in parallel of a plurality of pipes, in the sizing of the latter there must be imposed a speed of more than 5 mt/s, and preferably a speed from 10 to 40 mt/s.

In the case that the process requires a contribution of heat, the latter may be supplied by means of suitably arranged electrical heating elements.

The apparatus of this invention is particularly suitable for use in applications at a high pressure. In this case, because of the higher value of the density of the gases in circulation, there will be needed smaller sized apparatus, higher values of thermal exchange coefficient, reduced transportation rates in the connection lines and a reduced fluidization in the bed, and in the case of reactions there will be achieved improvements in the kinetics because of the increase in concentration of the reacting gases.

As already mentioned, for the satisfactory working of the circuit, it is determining that the gas flow that flows through the circuit has at each point a flow speed greater than 5 mt/s, preferably from 10 to 40 mt/s, in order to ensure an absolute reliability with respect to soiling and the avoidance of dead zones for the clogging of the dragged solid.

By way of example it may be mentioned that the apparatus of the invention is particularly suitable for reactions catalyzed by solid granular catalysts, with a gaseous product flowing out with the exhaust 11, possibly filtered or separated from the residues of dragged solid.

Another suitable application of the apparatus of the invention is that of the polymerization in the gaseous phase of linear $\alpha$-olefins for the preparation of plastic polymers. In this case the process is operated with solid and gaseous reactants continuously fed in and continuous discharge of a solid granular product.

A particularly important application of the apparatus of the invention is its use in the production of ethylene/propylene plastic copolymers.

In this case the apparatus comprises a circuit essentially consisting of a reactor 1, a centrifugal compressor 2, and a heat exchanger 3, connected together as indicated in Fig. 1. Into this circuit are fed in ethylene monomers 7, propylene monomers 8 and a possible reaction activator 10 and a homopolymeric polypropylene base 9 containing the catalyst, coming from a reaction in solution or in bulk or in a gaseous phase, possibly after separation of the diluent.

The homopolymerization stage produces for each catalyst particle a stereospecific matrix of polypropylene with an isotacticity greater than 90%, but preferably greater than 95%, in such a quantity as to preferably constitute 60-90% by weight of the end product. Inside this matrix, in the copolymerization stage, there is produced and distributed with great regularity a predominantly amorphous copolymer having a composition of 25-75% by weight of ethylene, preferably approximately 50% by weight of ethylene, in proportion to the remaining 10-40% by weight of the end product. The end product will have an ethylene content of up to 20% by weight.

Reactor 1 was made to operate at a pressure within the range of 2-40 kg/sq.cm and at a temperature of from 40 to 100° C. The dwell time of the polymer in the fluid polymerization bed was from 0.5 to 4 h, while the average composition ratio of the monomers in the gaseous phase, expressed as a ratio between the molar concentration of the ethylene and the sum of the molar concentrations of the ethylene and propylene, $C_2^-/C_2^- + C_3^-$, is within the range of 0.35-0.55. This parameter is in any case related to the quality of the copolymer to be produced and to the particular high-yield catalyst used in the reaction, and is controlled in order to obtain the production of the desired copolymer.

For this purpose the flow rates of the fed in monomers 7 and 8 and of the flow rate from the exhaust 11 are suitably adjusted.

The invention will be further described with reference to the following illustrative example.

*Example:*

This example is based on tests on a pilot scale and was carried out in a continuous plant with an output capacity of 25 kg/h of ethylene/propylene block copolymer. There was used a gaseous phase copolymerization apparatus as schematically represented in Fig. 1, in which the gas distributor mounted at the bottom of the reactor 1 was of the type illustrated in Fig. 2, with a lateral discharge for the product.

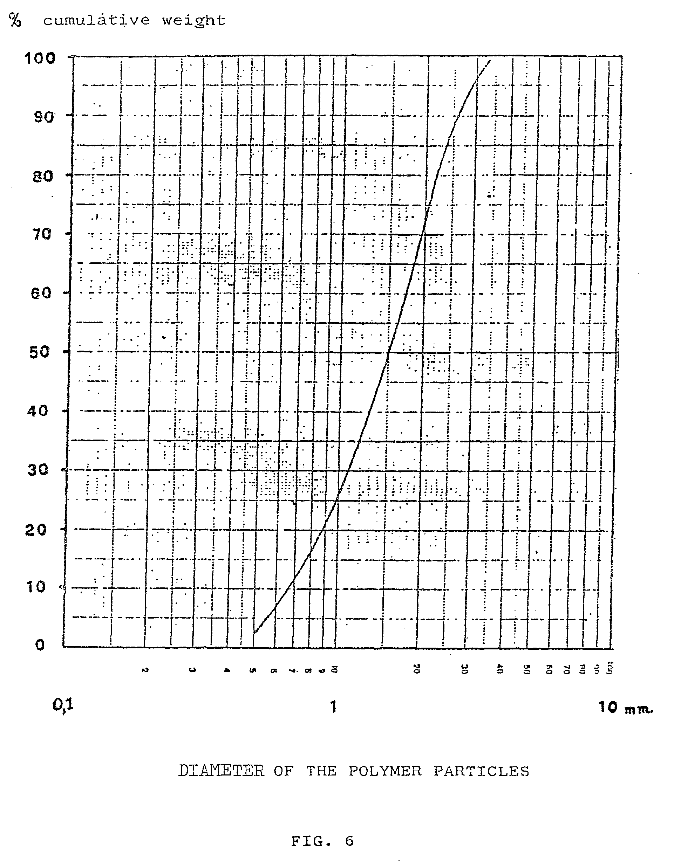

The copolymeric base was produced according to a bi-stage process in a liquid monomer. There was employed a catalyst prepared according to Example 1 of European Patent No. 45977, which allows the polymer to be obtained in the form of particles of a spherical shape and in a restricted granulometry, as shown in Fig. 6.

The polymer in suspension in a liquid monomer was separated from the propylene by flashing in a cyclone and by then feeding it into a fluidized bed reactor. For this purpose there was used a gaseous phase copolymerization reactor characterized by a fluidization rate equal to 45 cm/s.

The circulation speed of the gas/polymer mixture circulating in the circuit of Fig. 1 amounted to 12 mt/s in the line 4 and to 30 mt/s in the lines 5 and 6 and in the heat exchanger 3.

The operational conditions of the example are recorded in Table 1 below; the characteristics of the obtained copolymer are given in Table 2 below.

No soiling of the internal walls of the reactor nor clogging of compacted polymer were detected and there was achieved excellent control over the fluidization without clogging or deposits of polymer in the external circuit even after prolonged periods of operation of more than 1,000 h running.

*Table 1*

| Operational Conditions | Unit | |
|---|---|---|
| *1st STAGE: Homopolymer* Temperature | °C | 70 |
| Pressure | atm | equilibrium |
| Dwell time | hours | 1.3 |
| Melt flow rate "L" | g/10 min. | 1.82 |
| Isotacticity index | % | 96.7 |
| Yield | g.pol./g.CTZ | 16,500 |
| *2nd STAGE: Homopolymer* Temperature | °C | 75 |
| Pressure | atm | equilibrium |
| Dwell time | hours | 1.3 |
| Melt flow rate "L" | g/10 min. | 1.55 |
| Isotacticity index | % | 97 |
| Yield | g.pol./g.CTZ | 28,500 |
| *3rd STAGE: Copolymer* Temperature | °C | 70 |
| Pressure | atm | 8 |
| Dwell time | hours | 1 |
| Bound ethylene | % by weight | 10.9 |
| $C_2^-/(C_2^- + C_3^-)$ gaseous phase | mol/mol | 0.43 |

*Table 2*

| Characteristics of the End Product | Unit | |
|---|---|---|
| Melt flow rate "L" | g/10 min. | 1.72 |

| Characteristics of the End Product | Unit | |
|---|---|---|
| Yield | g.pol./g.CTZ | 36,000 |
| Mean polymer diameter | micron | 1,500 |
| Fraction of polymer <500 micron | % | 2 |
| Apparent poured/compacted density | g/cc | 0.47/0.52 |
| Flowability | s | 16 |
| Flexural elasticity modulus | MPa | 1,200 |
| Transition temperature (Ball Drop) | °C | <−45 |
| Izod C.I. impact resistance at 23° C | J/m | 380 |
| Izod C.I. impact resistance at 0° C | J/m | 115 |
| Gloss | % | 45 |
| HDT (at 46 N/sq.cm) | °C | 74 |

## Claims

1. A distributor (13) of fluidization gases for a fluidized bed reactor, characterized by comprising a double cone body comprising:

(a) a lower conical element (17), arranged in use with the vertex thereof directed downwards, provided with more than two ribs (18) on the lateral surface thereof, the said ribs having such a profile as to form, together with the wall of a containing shell for the distributor, flow channels (19) having a decreasing cross-section in an upward direction so that the velocity of gas flowing therealong will increase gradually and correspondingly, the ribs being arranged diametrically opposite to each other with an axial symmetry and with an inclination with respect to the vertical such as to impart to the inflowing gas current a tangential component, the profile and inclination of the ribs being such as to allow the passage of solid particles entrained by the inflowing gas, and such as to hinder the falling back of the particles of the fluidized bed whenever the feeding in of the gas is interrupted; and

(b) an upper conical element (20), arranged in use with the vertex thereof directed upwards, superimposed onto the lower conical element and having the function of activating the circulation of the solid in the fluidized bed, eliminating dead or stagnation zones.

2. A distributor as claimed in Claim 1, characterized in that the said cone body is provided with an axial discharging duct (21) for the fluidized solid material.

3. A distributor as claimed in Claim 1 or 2, characterized in that the said cone body comprises concentric conical elements each having a series of ribs.

4. A fluidized bed reactor (1), characterized by being provided with a distributor (13) as claimed in any preceding claim and by further comprising means for the recycling of the gas, and further characterized in that the said distributor and the said recycling means allow the passage of solid particles of the fluidized material entrained by the recycling gas.

5. A fluidized bed reactor as claimed in Claim 4, characterized by being provided with a centrifugal separator (14).

6. A fluidized bed reactor as claimed in Claim 4 or 5, characterized in that the distributor is arranged eccentrically with respect to the vertical axis of the reactor, and in that the reactor further comprises means (29) for rotating the distributor.

7. A process for the polymerization and copolymerization of α-olefins in a gaseous phase, in a fluidized bed comprising polymerized material containing catalyst, characterized in that the process is carried out in a fluidized bed reactor as claimed in any of Claims 4 to 6.

8. A process for the copolymerization of ethylene/propylene in a gaseous phase, in a fluidized bed comprising polymerized material containing catalyst, under such processing conditions as to obtain an amorphous copolymer, characterized in that the process is carried out in a fluidized bed reactor as claimed in any of Claims 4 to 6.

## Patentansprüche

1. Verteiler (13) für Verwirbelungsgase für einen Wirbelschichtreaktor, dadurch gekennzeichnet, dass er einen Doppelkonuskörper umfasst mit

(a) einem unteren konischen Element (17), das beim Gebrauch mit seiner Spitze nach unten gerichtet angeordnet ist, das mit mehr als zwei Rippen (18) an seiner Seitenfläche versehen ist, wobei die Rippen ein solches Profil haben, dass sie zusammen mit der Wand eines Aufnahmegehäuses für den Verteiler Strömungskanäle (19) mit abnehmendem Querschnitt in Richtung nach oben bilden, so dass die Geschwindigkeit des Gases, das daran entlang strömt, allmählich und dementsprechend zunimmt, die Rippen diametral einander gegenüber axialsymmetrisch und mit einer Neigung bezüglich der Vertikalrichtung angeordnet sind, so dass sie dem einfliessenden Gasstrom eine Tangentialkomponente geben, und das Profil und die Neigung der Rippen so sind, dass der Durchgang von Feststoffteilchen möglich ist, die durch das einströmende Gas mitgerissen werden, und dass ein Zurückfallen der Teilchen der Wirbelschicht verhindert wird, wenn immer die Einleitung des Gases unterbrochen wird, und

(b) einem oberen konischen Element (20), das beim Gebrauch mit seiner Spitze nach unten gerichtet angeordnet ist und das über dem unteren konischen Element und auf diesem angeordnet ist und die Funktion der Aktivierung der Zirkulation der Feststoffe in der Wirbelschicht und der Vermeidung von Tot- oder Stauzonen hat.

2. Verteiler nach Anspruch 1, dadurch gekennzeichnet, dass der konische Körper mit einer axialen Auslassleitung (21) für das verwirbelte Feststoffmaterial versehen ist.

3. Verteiler nach Anspruch 1 oder 2, dadurch gekennzeichnet, dass der konische Körper konzentrische konische Elemente umfasst, von denen jedes eine Reihe von Rippen hat.

4. Wirbelschichtreaktor (1), dadurch gekennzeichnet, dass er mit einem Verteiler (13) nach einem der vorhergehenden Ansprüche versehen ist und weiterhin eine Einrichtung zum Rezirkulieren des Gases umfasst, und der weiterhin dadurch gekennzeichnet ist, dass der Verteiler und die Rezirkulierungseinrichtung den Durchgang von Feststoffteilchen des verwirbelten Materials zulassen, die durch das rezirkulierende Gas mitgerissen werden.

5. Wirbelschichtreaktor nach Anspruch 4, dadurch gekennzeichnet, dass er mit einem Zentrifugalabscheider (14) versehen ist.

6. Wirbelschichtreaktor nach Anspruch 4 oder 5, dadurch gekennzeichnet, dass der Verteiler exzentrisch bezüglich der vertikalen Achse des Reaktors angeordnet ist, und dass der Reaktor weiterhin Einrichtungen (29) zum Drehen des Verteilers umfasst.

7. Verfahren zur Polymerisation und Copolymerisation von α-Olefinen in einer Gasphase in einer Wirbelschicht, die ein polymerisiertes Material umfasst, das einen Katalysator umfasst, dadurch gekennzeichnet, dass das Verfahren in einem Wirbelschichtreaktor nach einem der Ansprüche 4 bis 6 durchgeführt wird.

8. Verfahren zum Copolymerisieren von Äthylen/Propylen in einer Gasphase in einer Wirbelschicht, die polymerisiertes Material umfasst, das einen Katalysator enthält, und zwar unter solchen Verfahrensbedingungen, dass ein amorphes Copolymer erhalten wird, dadurch gekennzeichnet, dass das Verfahen in einem Wirbelschichtreaktor nach einem der Ansprüche 4 bis 6 durchgeführt wird.

**Revendications**

1. Un distributeur (13) de gaz de fluidisation pour un réacteur à lit fluidisé, caractérisé en ce qu'il comprend un corps à double cône comprenant:

a) un élément conique inférieur (17), disposé pour être utilisé, le sommet dirigé vers le bas, muni de plus de deux nervures (18) sur ses surfaces latérales, lesdites nervures ayant un profil tel qu'elles forment avec la paroi de la coque contenant le distributeur des canaux de circulation (19) ayant une section diminuant vers le haut de sorte que la vitesse du gaz qui y circule y augmente en conséquence progressivement, les nervures étant disposées de façon diamétralement opposée par rapport à un axe de symétrie et avec une inclinaison par rapport à la verticale de telle sorte que soit impartie au courant de gaz qui y pénètre une composante tangentielle, le profil et l'inclinaison des nervures étant tels que soit permis le passage des particules solides entraînées par le gaz qui y pénètre et de telle sorte que soit empêchée la chute des particules de lit fluidisé même si l'amenée de gaz est interrompue, et

b) un élément conique supérieur (20) disposé de façon à travailler le sommet dirigé vers le haut, superposé à l'élément conique inférieur et dont la fonction est d'activer la circulation du solide dans le lit fluidisé et d'éliminer les zones mortes ou de stagnation.

2. Un distributeur ainsi que revendiqué dans la revendication 1, caractérisé en ce que le corps en forme de cône est pourvu d'un conduit de décharge axial (21) pour la matière solide fluidisée.

3. Un distributeur selon l'une des revendications 1 ou 2, caractérisé en ce que ledit corps en forme de cône comprend des éléments coniques concentriques présentant chacun une série de nervures.

4. Un réacteur à lit fluidisé, caractérisé en ce qu'il est pourvu d'un distributeur (13) ainsi que revendiqué selon l'une des revendications précédentes et qu'il comprend en outre des moyens pour le recyclage du gaz, et en ce qu'il est caractérisé en outre en ce que ledit distributeur et lesdits moyens de recyclage permettent le passage des particules solides de matière fluidisée entraînées par le gaz de recyclage.

5. Un réacteur à lit fluidisé selon la revendication 4, caractérisé en ce qu'il est pourvu d'un séparateur centrifuge (14).

6. Un réacteur à lit fluidisé selon l'une des revendications 4 ou 5, caractérisé en ce que le distributeur est disposé de façon excentrique par rapport à l'axe vertical du réacteur et en ce que le réacteur comprend des moyens (29) de rotation du distributeur.

7. Un procédé pour la polymérisation et la copolymérisation d'α-oléfines dans une phase gazeuse, dans un lit fluidisé comprenant un catalyseur contenant une matière polymérisée, caractérisé en ce que le procédé est mis en œuvre dans un réacteur à lit fluidisé, ainsi que revendiqué selon l'une des revendications 4 à 6.

8. Un procédé pour la copolymérisation d'éthylène/propylène en phase gazeuse dans un lit fluidisé comprenant un catalyseur contenant une matière polymère, dans les conditions de traitement telles que l'on obtienne un copolymère amorphe, caractérisé en ce que le procédé est mis en œuvre dans un réacteur à lit fluidisé ainsi, que revendiqué selon l'une des revendications 4 à 6.

FIG.1

9

FIG. 2

FIG. 3

FIG. 4

15

FIG. 5

% cumulative weight

DIAMETER OF THE POLYMER PARTICLES

FIG. 6

19